# FASCICULE DE BREVET EUROPEEN

(11) **EP 3 224 393 B1**
(45) Date de publication et mention de la délivrance du brevet: **03.10.2018**
(21) Numéro de dépôt: 15810689.8
(22) Date de dépôt: 24.11.2015
(51) Int. Cl.: D01D 5/24, F16L 59/153, F16L 11/08, D03D 25/00, D03D 11/00, D03D 15/00

(54) **COUCHE D'ISOLATION THERMIQUE POUR CONDUITE TUBULAIRE FLEXIBLE SOUS-MARINE**
WÄRMEDÄMMSCHICHT FÜR EINE FLEXIBLE UNTERWASSERROHRLEITUNG
THERMAL INSULATION LAYER FOR A FLEXIBLE SUBMARINE TUBULAR PIPE

(30) Priorité: 24.11.2014 FR 1402670
(43) Date de publication de la demande: 04.10.2017
(73) Titulaire: Technip France, 92400 Courbevoie (FR)
(72) Inventeur: DO, Anh-Tuan, 95240 Cormeilles-en-Parisis (FR)
(74) Mandataire: Gendron, Vincent Christian
(86) Numéro de dépôt international: PCT/FR2015/053194
(87) Numéro de publication internationale: WO 2016/083727

(56) Documents cités:
- EP-A1- 2 045 499
- WO-A1-2012/109740
- WO-A1-2013/044920
- US-A1- 2010 269 881

## Description

La présente invention concerne une conduite tubulaire flexible sous-marine destinée au transport de fluides d'hydrocarbures en mer profonde voire très profonde présentant une isolation thermique améliorée. Plus précisément, l'isolation thermique de la conduite sous-marine est réalisée à partir d'une bande spécifique.

Il est connu depuis de nombreuses années le fait d'isoler thermiquement les installations sous-marines et tout particulièrement les conduites sous-marines telles que les conduites rigides métalliques, les ombilicaux, ou encore les conduites flexibles comme les conduites montantes (ou « risers » en langue anglaise) et les conduites reposant sur le fond marin (ou « flowlines » en langue anglaise).

Les conduites tubulaires flexibles sous-marines comprennent généralement une structure complexe réalisée par la combinaison de plusieurs couches polymériques et métalliques capables de se mouvoir entre elles lorsqu'un effort de flexion est appliqué sur ces conduites. Les couches polymériques sont principalement des couches de protection ou de confinement tandis que les couches métalliques sont des couches de renforcement. De telles conduites sont définies par les documents normatifs API 17J « Specification for Unbonded Flexible Pipe » et API RP 17B « Recommended Practice for Flexible Pipe » publiés par l'American Petroleum Institute (API).

Selon la nature du champ pétrolier exploité, les fluides d'hydrocarbures transportés par la conduite flexible peuvent présenter une température élevée ou au contraire une température basse.

Dans le premier cas, cela peut conduire à la dégradation des matériaux polymériques composants les conduites et/ou corroder les couches métalliques de renfort.

A l'inverse, si la température est trop basse, cela peut conduire à une augmentation de la viscosité des fluides d'hydrocarbures transportés, par suite, à la formation de précipités de paraffine tendant à réduire le diamètre du passage d'écoulement des fluides et partant à l'obstruction de la conduite.

Ce phénomène est d'autant plus rapide que la conduite flexible a été dépressurisée, lors d'un arrêt de production, en vue d'effectuer une opération de maintenance.

Ainsi, le contrôle de la température des fluides d'hydrocarbures circulant au sein de la conduite flexible est d'autant plus important que l'intégrité de celle-ci est en jeu.

Dans le cas de conduites flexibles sous-marines, celles-ci sont la plupart du temps utilisées pour la production d'hydrocarbures se trouvant à des profondeurs particulièrement grandes.

A ces profondeurs extrêmes de l'ordre de 3000 à 3500 mètres, la pression hydrostatique s'appliquant sur les couches externes de leur structure est très importante.

La pression d'écoulement des fluides d'hydrocarbures circulant en leur sein produit également des efforts circonférentiels relativement importants pouvant conduire à l'éclatement de la couche polymérique de confinement ou gaine de pression.

L'ensemble de ces efforts appliqués à la conduite flexible n'est pas négligeable et il apparaît capital d'en tenir compte dans les paramètres de conception de la conduite flexible sous-marine.

Depuis de nombreuses années, l'utilisation d'une couche ou bande réalisée à partir d'une mousse syntactique ou encore d'un aérogel aux fins d'isoler thermiquement les conduites flexibles sous-marines s'est répandue.

Les mousses actuellement utilisées sont, soit des mousses fabriquées par extrusion de matériaux thermoplastiques contenant des agents gonflants, soit des mousses syntactiques fabriquées par extrusion de matériaux thermoplastiques chargés en microsphères de verre.

Cependant, chacune de ces mousses possèdent des propriétés de conductivité thermique et de résistance mécanique en compression différentes et, selon les propriétés finales recherchées il faut faire un compromis.

Les mousses en thermoplastiques extrudés contenant des agents gonflants possèdent un coefficient d'isolation thermique élevé, de l'ordre de 0,03 W/m.K à 0,06 W/m.K mais leur résistance en compression n'est pas bonne ce qui limite leur utilisation à quelques centaines de mètre de profondeur.

A l'inverse, les mousses syntactiques extrudées contenant des microsphères de verre possèdent une résistance en compression améliorée leur permettant une utilisation jusqu'à des profondeurs de l'ordre de 3000 mètres mais leur coefficient d'isolation thermique est bien moindre puisqu'il est environ égal à 0,15 W/m.K. pour de faibles profondeurs d'eau et il augmente considérablement pour de grandes profondeurs d'eau.

Par conséquent, il apparait que l'utilisation de mousses pour l'isolation thermique de conduites flexibles sous-marines destinées à des applications en mer très profonde ne nous permet actuellement pas d'obtenir une couche d'isolation présentant une faible conductivité thermique ainsi qu'une bonne performance mécanique en compression.

Comme expliqué ci-avant, il est donc nécessaire de faire un compromis entre isolation thermique ou performance mécanique.

Plus récemment, des solutions alternatives d'isolation thermique pour les conduites flexibles sous-marines ont été divulguées.

Par exemple, la demande de brevet internationale WO 2013/044920 divulgue une conduite flexible sous-marine comportant une bande d'isolation thermique comprenant un matériau support dans lequel sont ménagés une pluralité de trous pouvant être remplis d'un fluide liquide, gazeux ou encore d'un corps solide. Le matériau support présente des propriétés mécaniques particulières lui permettant de résister aux efforts mécaniques et plus précisément aux efforts en compression subit par la conduite flexible. Quant aux trous ménagés dans le matériau support, ceux-ci peuvent être longitudinaux traversant ou non et ils sont prévus pour assurer l'isolation thermique de la conduite.

Cependant, la fabrication d'une telle bande est particulièrement complexe et coûteuse à réaliser.

En outre, le brevet européen EP 2 045 499 divulgue un tuyau souple comprenant une couche isolante composée d'une couche maillée réalisée à partir de filaments tissés comportant une pluralité d'alvéoles entre les filaments et noyée entre deux gaines polymériques extrudées. Les alvéoles forment des vides pouvant contenir de l'air mais préférentiellement, les vides contiennent une matière aérogel. La structure sandwich de cette couche isolante permet au tuyau souple de résister aux efforts radiaux en compression et les vides entre les filaments lui assurent une bonne isolation thermique.

Cependant, un des inconvénients des matériaux à structures sandwichs est leur comportement anisotropique rendant leur utilisation en mer très profonde peu appropriée du fait de la pression hydrostatique élevée s'appliquant selon de multiples directions.

Selon un autre aspect, il est également connu d'utiliser des fibres synthétiques creuses pour des applications d'isolation thermique de la vie courante, par exemple dans la fabrication de produits textiles ou encore dans la fabrication de produits de literie.

Les fibres creuses sont conçues pour emmagasiner de l'air et partant, jouer le rôle d'isolant thermique. Cependant, pour ces applications on ne recherche pas de bonnes propriétés de résistance mécanique en compression.

Il apparaît que fabriquer une couche isolante thermiquement possédant de bonnes propriétés d'isolation thermique et de résistance mécanique en compression ne soit pas si aisé.

Ainsi, la présente invention a donc pour but de remédier en tout ou partie aux inconvénients précités.

A ce titre, l'invention concerne une conduite tubulaire flexible sous-marine pour le transport de fluides d'hydrocarbures comprenant :
- une gaine de pression ;
- au moins une nappe d'armures ; et,
- au moins une couche d'isolation thermique réalisée par tissage triaxial d'au moins deux nappes de fils de chaîne et d'au moins une rangée de fils de trame pour lier les au moins deux nappes de fils de chaîne, la au moins une rangée de fils de trame étant apte à solidariser les au moins deux nappes de fils de chaîne, caractérisée en ce que les fils de trame de la couche d'isolation thermique comprennent une section creuse.

La nappe d'armures s'étend autour de la gaine de pression, tandis que la couche d'isolation thermique s'étend-elle, autour de la nappe d'armures. Le tissage triaxial, ou multicouches, consiste à croiser orthogonalement des fils de chaîne en nappe avec des fils de trame. Les fils de chaîne traversent alors les épaisseurs de fils de trame superposées, partiellement sur des couches adjacentes ou selon toute l'épaisseur, afin de réaliser un tissu à entrelacement. En outre, les fils de chaîne ou de trame, sont préférentiellement réalisés à partir de mèches de fibre.

Autrement dit, l'objet de l'invention est une conduite tubulaire flexible sous-marine pour le transport de fluides d'hydrocarbures comprenant : une gaine de pression ; au moins une nappe d'armures située autour de la gaine de pression ; et, au moins une couche d'isolation thermique réalisée par tissage de fils, ladite couche d'isolation thermique présentant des fils de trame et des fils de chaîne sensiblement orthogonaux aux fils de trame, les fils étant réalisés à base de fibres ; et, les fils de trame comprennent des fibres creuses.

Préférentiellement, ladite couche d'isolation thermique est réalisée par tissage triaxial d'au moins deux nappes de fils de chaîne et d'au moins une rangée de fils de trame.

Ainsi, une caractéristique selon l'invention permet de réaliser une conduite tubulaire flexible comprenant une couche qui possède d'excellentes propriétés mécaniques générales, aussi bien dans la direction axiale et/ou transversale que dans la direction radiale. En outre, quelque soit les efforts radiaux de compression qui s'appliquent, sa conductivité thermique demeure relativement basse.

La couche d'isolation thermique de la conduite tubulaire flexible selon l'invention peut comprendre l'une ou plusieurs des caractéristiques suivantes, prises isolément ou suivant toute combinaison techniquement possible :
- les fils de chaîne de la couche d'isolation thermique comprennent une section creuse.
- les fils de chaîne et les fils de trame de la couche d'isolation thermique comprennent une section creuse multiparois.
- la résistance en traction de la couche d'isolation thermique, mesurée à 23°C est au moins égale à 150 daN selon la norme ASTM D638.
- la résistance en compression de la couche d'isolation thermique, mesurée à 23°C et à 60°C, est au moins égale à 20MPa selon la norme DIN EN 826.
- la conductivité thermique de la couche d'isolation thermique mesurée à 60°C en référence aux normes DIN EN ISO 8497 et EN 12667 est comprise entre 0,01 W/m.K et 0,15 W/mK, de préférence entre 0,01 W/m.K et 0,10 W/m.K et avantageusement entre 0,01 W/m.K et 0,05 W/m.K.
- les fils de chaîne et/ou les fils de trame de la couche d'isolation thermique sont choisis parmi les fibres organiques ou inorganiques.
- les fibres organiques sont sélectionnées parmi les fibres naturelles végétales telles que par exemple les fibres de coton, de chanvre, de lin, de sisal, de jute, de kénaf, de coco, de bambou, de ramie, d'ortie, de palmiers, de bananiers ou les fibres synthétiques organiques telles que par exemple les fibres de polyamides, de polyesters, de polyéthylène, de polypropylène, acryliques, aramides.
- les fibres inorganiques sont sélectionnées parmi les fibres synthétiques inorganiques telles que par exemple les fibres de verre, les fibres de basalte et les fibres céramiques.
- la couche d'isolation thermique est imprégnée d'une matière aérogel ;
- au moins une bande intermédiaire est appliquée sur au moins une des faces de la au moins une couche d'isolation thermique et en ce que liée avec celle-ci ;
- au moins une bande intermédiaire comprend un agencement d'un ou plusieurs films minces superposés les uns au-dessus des autres ;
- le film mince est un film polymérique ;
- le film mince est métallisé ;
- la au moins une bande intermédiaire est liée à la couche d'isolation thermique par soudage aux ultrasons, par collage ou par thermocollage.

L'invention sera mieux comprise à la lueur de la description qui va suivre, en référence aux dessins annexés dans lequel :
- la Figure 1 est une vue en écorché de la conduite tubulaire flexible selon l'invention ;
- la Figure 2 est une vue schématique partielle de la couche d'isolation de l'invention ;
- les Figures 3a à 3e illustrent différentes géométries de la section d'un filament selon l'invention, vues en coupe droite perpendiculaire à sa direction longitudinale ;
- la Figure 4a et 4b illustrent différentes géométries de section multiparois creuse d'un filament selon l'invention, vues en coupe droite perpendiculaire à sa direction longitudinale ; et,
- La figure 5 est une vue en écorché de la conduite tubulaire flexible selon un autre mode de réalisation de l'invention.

Dans la description qui va suivre, les termes « interne », « intérieur » et « intérieurement » désignent tout élément le plus proche radialement d'un axe longitudinal Δ-Δ' et, inversement, les termes « externe », « extérieur » et « extérieurement » désignent tout élément le plus éloigné radialement de l'axe longitudinal Δ-Δ'.

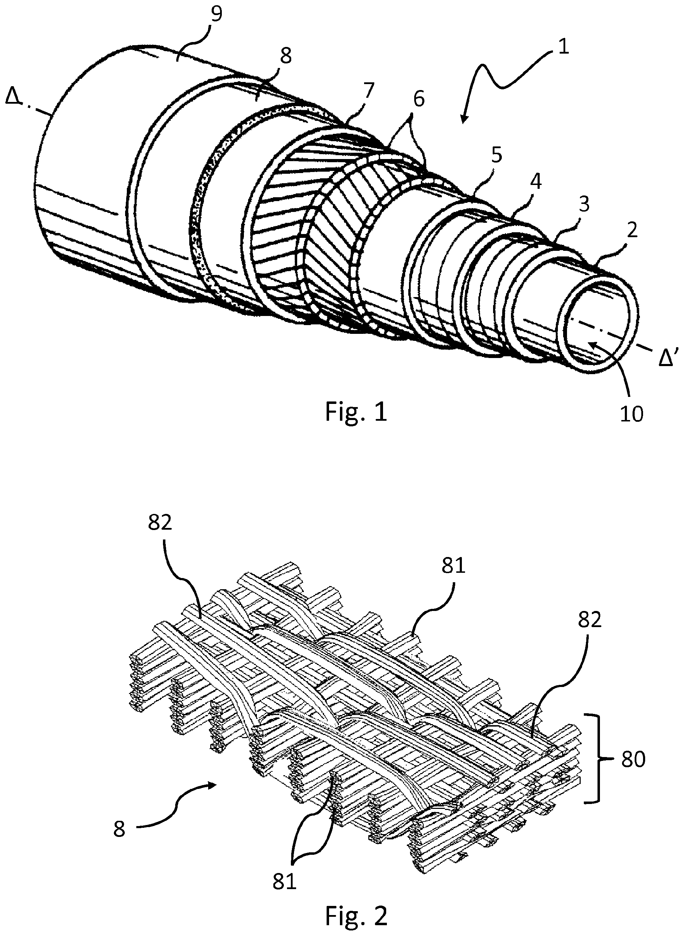

Une conduite tubulaire flexible 1 sous-marine selon l'invention est représentée schématiquement en Figure 1.

La conduite 1 est destinée au transport d'un fluide pétrolier depuis le réservoir situé dans le fond marin jusqu'en surface ou elle est reliée à une installation de production offshore fixe ou flottante, ou bien pour le transfert de fluides d'injection, de contrôle ou de gaz de l'installation de production en surface vers le réservoir sous-marin. On appelle ce type de conduites sous-marines, des conduites montantes (ou « risers » en langue anglaise).

La distance séparant le fond marin de la surface est par exemple comprise entre 200 mètres et 4000 mètres.

La conduite 1 peut aussi se destiner au transfert de fluides pétrolier entre deux unités flottantes, par exemple entre deux unités de production, stockage et déchargement du type FPSO (Floating Production, Storage & Offloading) ou, entre une plateforme pétrolière ou un FPSO et une bouée de déchargement. Les conduites utilisées dans ces cas-là sont des lignes d'export (ou « export lines » en langue anglaise).

Selon une encore autre utilisation, la conduite 1 peut également être une conduite flexible reposant sur le fond marin et destinée au transport des fluides de production ou d'injection, entre une structure sous-marine et une autre structure sous-marine ou un équipement de production. Ce type de conduite est dénommée « flowline » en langue anglaise.

La conduite tubulaire flexible 1 de la Figure 1 comporte une structure complexe formée par une combinaison de plusieurs couches, principalement métalliques et polymériques, disposées les unes au-dessus des autres.

La conduite 1 est du type non liée (« unbonded » en langue anglaise), c'est-à-dire que chaque couche de sa structure peut se mouvoir axialement par rapport aux couches adjacentes, le long de l'axe Δ-Δ' lorsque la conduite 1 est soumise à des efforts extérieurs de flexion.

Une première gaine en polymère extrudée sur un mandrin également appelée gaine de pression 2 ou gaine interne d'étanchéité est la couche la plus interne de la conduite tubulaire flexible 1.

La gaine de pression 2 délimite un passage d'écoulement 10 destiné à confiner le transport de fluides d'hydrocarbures.

Le matériau polymère utilisé pour la réalisation de la gaine de pression 2 est choisi parmi les familles de polymères telles que les polyoléfines, les polyamides ou bien les polymères fluorés tels que le PVDF (polyfluorure de vinylidène).

Au-dessus de cette première gaine en polymère 3 est disposée une première couche de renfort appelée voûte de pression. La voûte de pression comporte une ou plusieurs nappes d'armures de résistance à la pression. Les armures de ces nappes se présentent sous la forme de fils métalliques profilés agrafés entre eux et enroulés hélicoïdalement à pas court, typiquement selon un angle d'hélice de valeur absolue comprise entre 70° et 90° par rapport à l'axe Δ-Δ'. La caractéristique selon laquelle la valeur absolue de l'angle d'hélice est proche de 90° confère à la nappe d'armures une grande résistance à la pression.

Les fils métalliques profilés présentent par exemple une géométrie en Z, en T, en U, en K, etc.

Cette première nappe d'armures 3 est destinée à reprendre les efforts radiaux générés par la circulation au sein du passage d'écoulement 10, du fluide d'hydrocarbures sous pression et ainsi éviter l'éclatement de la gaine interne d'étanchéité 2.

Au moins une paire de nappes d'armures 6 formée d'une pluralité de fils métalliques plats est enroulée à pas long par-dessus la voûte de pression 3, typiquement selon un angle d'hélice de valeur absolue comprise entre 20° et 60° par rapport à l'axe Δ-Δ'.

Selon une variante, la au moins une paire de nappes d'armures 6 est réalisée par l'enroulement à pas long autour de l'axe Δ-Δ' d'une pluralité de fils composite ou rubans plats renforcés avec des fibres longitudinales en carbone tel que divulgué dans la demande de brevet internationale WO 1999049259.

La au moins une paire de nappes d'armures 6 est destinée à reprendre les contraintes de tension longitudinale ainsi qu'à compenser les efforts de torsion engendrés par la pression interne.

Autour de la au moins une paire de nappes d'armures 6, on vient extruder une seconde gaine en polymère également appelée gaine externe d'étanchéité 7 autour des couches métalliques de renfort 3 ; 6. Le matériau polymère utilisé pour la réalisation de la gaine externe d'étanchéité 7 est choisi parmi les mêmes familles que celles données ci-dessus pour la gaine de pression 2.

Le volume situé entre la gaine de pression 2 et la gaine externe d'étanchéité 7 défini un espace annulaire. Cet espace annulaire comprend les couches métalliques de renfort 3 ; 6.

Enfin, on vient disposer autour de la gaine externe d'étanchéité 7, une couche d'isolation 8 thermique objet de la présente invention et qui sera décrite plus en détails dans la suite de la demande.

Bien entendu, d'autres couches intermédiaires formées à partir d'un matériau polymérique ou bien à partir d'un matériau métallique peuvent être intercalées entre les couches précédemment décrites.

Par exemple, suivant le type d'application à laquelle doit satisfaire la conduite 1, une couche additionnelle 4 de renfort présentant un enroulement à pas court, typiquement selon un angle d'hélice de valeur absolue comprise entre 75° et 90° par rapport à l'axe Δ-Δ', de fils métalliques plats ou frettes peut être intercalée entre la voûte de pression 3 et la paire de nappes d'armures 6 de résistance à la traction. La couche additionnelle 4 a pour fonction de renforcer la voûte de pression 3 en reprenant une partie des efforts radiaux internes.

Une deuxième paire de nappes d'armures de résistance à la traction peut également être enroulée par-dessus la première paire de nappes d'armures 6.

En outre, une gaine polymérique intermédiaire 5 peut aussi être extrudée autour de la couche additionnelle 4 de renfort afin d'éviter l'effondrement de la gaine de pression 2 en cas d'endommagement de la gaine externe d'étanchéité 7.

Aussi, une gaine de protection 9 peut être extrudée au-dessus de la couche d'isolation 8 thermique afin d'éviter que celle-ci ne soit endommagée lors de l'installation de la conduite tubulaire flexible 1 ou bien en service.

Les matériaux polymères utilisés pour réaliser les couches 4 et 9 sont par exemple choisis parmi les mêmes familles que celles données ci-dessus pour la gaine de pression 2.

De plus, la conduite 1 peut comporter d'autres gaines polymériques ou des bandes polymériques intercalées entre une ou plusieurs des couches précédemment décrites. La conduite 1 peut notamment comporter une barrière intermédiaire d'étanchéité, ou de neutralisation des gaz corrosifs du type H₂S et CO₂. Elle peut aussi comporter un ou plusieurs couches constituées d'enroulement de bandes polymériques, par exemple une couche anti-usure intercalée entre deux couches de renfort.

Selon une variante de réalisation de l'invention, la conduite tubulaire flexible 1 comprend au moins une couche d'isolation thermique 8 réalisée sous la forme d'une gaine (ou d'une bande) extrudée (ou enroulée) entre la couche 4 de frettes et la au moins une paire de nappes d'armures 6 de résistance à la traction et/ou entre la première paire de nappes d'armures 6 de résistance à la traction et la deuxième paire de nappes d'armures de résistance à la traction.

Dans l'ensemble, la couche d'isolation thermique 8 peut être disposée entre n'importe quelles couches de la conduite 1. De la sorte, on optimise la capacité d'isolation thermique de la conduite tubulaire flexible 1 selon les besoins recherchés.

Mais avantageusement, on préférera la disposer le plus proche de l'axe Δ-Δ' de la conduite tubulaire flexible 1, à proximité de la gaine de pression 2. Par exemple, la couche d'isolation thermique 8 est disposée entre la voûte de pression 3 et la au moins une paire de nappes d'armure 6. En effet, cela permet de réduire les phénomènes de transfert de chaleur par effets de convection, conduction ou encore par radiation.

Partant, on maintien à une température adéquate le fluide d'hydrocarbures circulant dans le passage d'écoulement 10. Ainsi, on empêche la formation d'hydrates et on évite la détérioration des matériaux polymères formant les couches de protection et de confinement de la conduite tubulaire flexible 1.

La au moins une couche d'isolation thermique 8 que comporte la structure de la conduite tubulaire flexible 1 sous-marine est illustrée en Figure 2.

La couche d'isolation 8 est réalisée sous la forme d'une bande 80 comprenant un assemblage de filaments agencés de manière particulière.

Les filaments sont des fibres continues de grandes longueurs présentant généralement une section sensiblement circulaire.

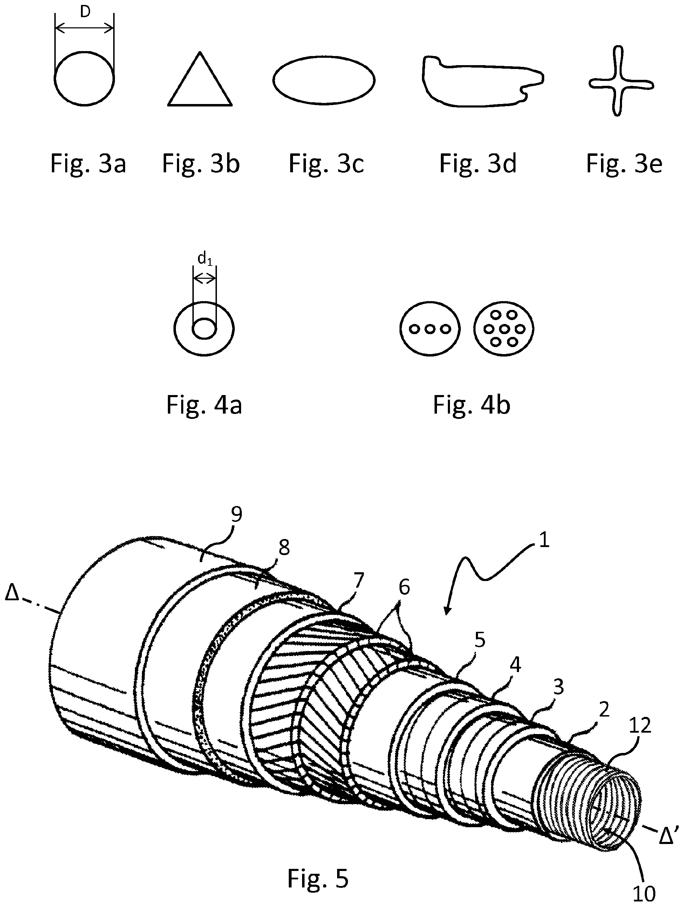

Aussi, il est tout à fait envisageable d'utiliser des filaments présentant des géométries de section différentes et variées du type de celles représentées sur la Figure 3. Par exemple, les sections des filaments peuvent être de géométrie triangulaire (Figure 3b), elliptique (Figure 3c), multilobée (Figure 3d) ou encore en forme de croix (Figure 3e).

La longueur des filaments est par exemple comprise entre 100 mètres et 5000 mètres.

Le diamètre D des filaments est par exemple compris entre 7 micromètres et 50 micromètres selon la section du filament.

Sur la Figure 2, on distingue plusieurs fibres s'étendant dans le sens longitudinal de la bande 80, assemblées et agencées sous la forme d'au moins une nappe. L'assemblage de la pluralité des fibres longitudinales forme ce que l'on appelle des fils de chaîne 81.

D'autres fibres longues ou fils de trame 82 sont entrecroisées dans le sens transverse entre la au moins une nappe de fils de chaines 81 de façon à assurer la cohésion entre tous les fils 81 ; 82. Partant on obtient une bande 80 dont la structure générale possède un bon maintien.

Les fils de chaîne 81 et les fils de trame 82 utilisés pour la réalisation de la bande 80 sont choisis parmi deux grandes familles de fibres, à savoir les fibres organiques et/ou les fibres inorganiques.

Les fibres organiques sont sélectionnées parmi les fibres naturelles végétales telles que par exemple les fibres de coton, de chanvre, de lin, de jute, de sisal, de kénaf, de coco, de bambou, de ramie, d'ortie, de palmiers, de bananiers ou encore parmi les fibres synthétiques organiques telles que par exemple les fibres de polyamides, de polyesters, de polyéthylène, de polypropylène, acryliques, aramides.

Les fibres inorganiques sont sélectionnées parmi les fibres synthétiques inorganiques telles que par exemple les fibres de verre, les fibres de basaltes et les fibres céramiques.

La bande 80 formant la couche d'isolation thermique 8 est obtenue par une opération de tissage des fils de chaîne 81 avec les fils de trame 82. La structure de la bande 80 ainsi obtenue présente une texture ou volume textile, multidirectionnel.

Plus précisément, le tissage de la bande 80 est tridimensionnel ou triaxial (3D). Ainsi, la bande possède d'excellentes propriétés mécaniques en traction et en compression. Ainsi, la bande peut être utilisée au sein de conduites tubulaires flexibles 1 sous-marines destinées à des applications statiques et/ou dynamiques pour de grandes voire très grandes profondeurs d'eau.

La bande 80 possède une longueur comprise entre 100 mètres et 5000 mètres, une largeur comprise entre 100 millimètres et 200 millimètres et une épaisseur comprise entre 1 et 3 millimètres.

En outre la bande 80 comprend une densité comprise entre 300 et 700 kg/m³, de préférence comprise entre 450 et 600 kg/m³.

A cet effet, la résistance en traction de la bande 80 mesurée à température ambiante, soit à 23°C environ, est au moins égale à 150 daN selon la norme ASTM D638.

En outre, elle possède aussi une résistance en compression mesurée à température ambiante, soit à 20°C environ, qui est au moins égale à 20MPa selon la norme DIN EN 826. Pour une température en service de 60°C mesurée dans l'espace annulaire de la conduite 1, la résistance en compression de la bande 80 reste également au moins égale à 20MPa selon la norme DIN EN 826.

Les fils de trame 82 utilisés pour confectionner la bande 80 sont spécifiquement dédiés pour la réalisation de la présente invention en ce sens qu'ils comprennent une section creuse (ou « lumen » en langue anglaise), comme illustré sur la Figure 4a. Le diamètre d₁ de la section creuse peut varier entre 1 micromètre et 40 micromètres suivant le diamètre des filaments utilisés pour le tissage de la bande.

Les fils de trame 82 comprennent une seule section creuse mais, de manière avantageuse, ils comprennent une pluralité de sections creuses ménagées sur la totalité de la longueur des fils, comme illustré sur la Figure 4b.

Ces types de fils sont aussi dénommés fils à section creuse multiparois. Par exemple, le nombre de sections creuses peut varier de deux ou trois jusqu'à une dizaine voire plusieurs centaines.

On préfère utiliser des fils à section creuse multiparois que des fils ne présentant qu'une seule section creuse, car ils sont moins enclin à s'aplatir lorsqu'ils sont soumis à des efforts de compression. Ils sont donc tout à fait appropriés à la réalisation d'une bande d'isolation thermique de conduite flexible sous-marine.

Suivant le nombre de sections creuses multiparois, le diamètre d₁ peut varier entre 1 micromètre et 8 micromètres.

Les fils de trames 82 sont des fibres creuses ce qui leur permet d'emmagasiner de l'air et partant d'isoler thermiquement la conduite 1, aussi bien en service que lors d'arrêt de production.

Selon une variante de réalisation de l'invention, les fils de chaîne 81 comprennent également une ou plusieurs sections creuses ménagées sur la totalité de leur longueur. De cette manière, la conductivité thermique de la bande est significativement diminuée. Or, plus la conductivité thermique est faible, plus l'isolation thermique est importante.

Le fait que les fils 81 ; 82 soient creux n'est pas un inconvénient pour l'isolation thermique de la conduite tubulaire flexible 1. En effet et de manière tout à fait surprenante, le fait que la structure de la bande 80 soit réalisée par tissage triaxial, même très fortement sollicitée en compression, les fibres à sections creuses 81 ; 82 ne sont pas assez comprimées pour que les performances d'isolation thermique soient dégradées.

La structure tridimensionnelle de la bande 80 lui apporte une certaine stabilité volumique lui permettant de subir les efforts radiaux de compression engendrés par la pression interne et/ou la pression hydrostatique s'appliquant sur la conduite 1.

En effet, pour une température mesurée de 60°C en référence aux normes DIN EN ISO 8497 et EN 12667, la conductivité thermique de la couche d'isolation 8 formée par la bande 80 est comprise entre 0,01 W/m.K et 0,15 W/mK, de préférence entre 0,01 W/m.K et 0,10 W/m.K et avantageusement entre 0,01 W/m.K et 0,05 W/m.K.

Selon un premier exemple d'une autre variante de réalisation de l'invention, la couche d'isolation thermique 8 est réalisée sous la forme d'une bande 80 telle que décrit ci-dessus et pour laquelle les fils de chaîne 81 et les fils de trame 82 sont imprégnés avec un matériau polymérique thermodurcissable.

Par exemple, le matériau polymérique thermodurcissable est sélectionné parmi les résines époxydes (EP), les résines vinylesters (VE) ou encore les résines polyesters insaturées (UP). De la sorte, on améliore les propriétés mécaniques générales de la couche d'isolation thermique 8.

Dans un second exemple de réalisation, on remplace le matériau polymérique thermodurcissable par un matériau aérogel. Partant, on améliore les propriétés d'isolation thermique de la conduite tubulaire flexible 1 sans engendrer de surpoids significatif au niveau de sa structure.

On observera que dans certaines circonstances, la dénomination des fils de trame et des fils de chaîne est intervertie.

Dans une encore autre variante de réalisation de l'invention, la conduite tubulaire flexible 1 comprend au moins une couche intermédiaire disposée entre la couche d'isolation thermique 8 et les autres couches constitutives de la structure de la conduite 1.

La au moins une bande intermédiaire possède une longueur comprise entre 10 mètres et 5000 mètres ainsi qu'une largeur comprise entre 50 millimètres et 500 millimètres.

La au moins une couche intermédiaire est réalisée par l'enroulement à pas court d'au moins une bande autour de la couche d'isolation thermique 8, c'est-à-dire que la valeur absolue de l'angle d'hélice que fait la bande avec l'axe longitudinal Δ-Δ' de la conduite est comprise entre 70° et 90°.

Avantageusement, on enroule au moins une bande sur la conduite 1, intérieurement à la couche d'isolation thermique 8. De préférence, on enroule au moins une bande sur la conduite 1 intérieurement et extérieurement à la couche d'isolation thermique 8.

La au moins une bande intermédiaire comprend un agencement d'un ou plusieurs films minces superposés les uns au-dessus des autres.

Le film mince est par exemple un film polymérique de faible épaisseur. En variante, le film mince est un film métallisé de faible épaisseur. Par film métallisé on entend un film polymérique revêtu d'une épaisseur de métal, typiquement d'aluminium. Un tel film est par exemple utilisé en tant que film d'emballage dans l'alimentaire, en tant que papier décoratif, ou encore en tant que diélectrique pour condensateur.

L'épaisseur du film est plus fine que celle de la bande d'isolation thermique 8. Elle est par exemple comprise entre 2 micromètres et 2 millimètres, de préférence entre 50 micromètres et 500 micromètres, et avantageusement entre 100 micromètres et 200 micromètres. Ainsi, la faible épaisseur du film n'altère pas la rigidité en flexion de la conduite 1.

Le film mince peut-être réalisé à partir de n'importe quels matériaux polymères thermoplastiques. Mais de préférence, les matériaux polymères utilisés pour la réalisation du film sont choisis parmi les familles de polyoléfines tels que le polyéthylène (PE), le polypropylène (PP) ou encore le polypropylène mono-orienté axialement, de polyamides tels que le polyamide 11 (PA-11) ou le polyamide 12 (PA-12), de polyéthers tels que le polyoxyméthylène (POM), de polysulfones tels que le polyéthersulfone (PES), le polyphénylsulfone (PPSU), de polysulfures, de polyéthylènes téréphtalates (PET), de polymères fluorés tels que le polyfluorure de vinylidène (PVDF), le polychlorotrifluoroéthylène (PCTFE), le polytétrafluoroéthylène (PTFE), le perfluoroalkoxy (PFA), les polyaryléthercétones tels que le polyétheréthercétone (PEEK), le polyéthercétonecétones (PEKK), le polyétheréthercétonecétone (PEEKK) ou encore le polyéthercétoneéthercétonecétone (PEKEKK). Pour les performances extrêmes en température et en étanchéité (diffusion de gaz très faible), les films à base PAEK(Polyaryletherketone) sont adaptés.

Dans une variante, la au moins une bande intermédiaire est un film polymérique mince réalisée avec un matériau polymère thermoplastique moussé à cellules fermées. Le matériau polymère thermoplastique est par exemple choisi parmi les mêmes familles que celles décrites ci-avant. Un tel film permet d'améliorer encore un peu plus les propriétés d'isolation thermique de la conduite 1. Aussi, sa structure à cellules fermées permet d'assurer une fonction de propriété barrière aux fluides en présence (par exemple CO₂, CH₄, H₂S et H₂O) dans l'espace annulaire de la conduite 1.

Ainsi, la majorité des gaz présents dans le fluide d'hydrocarbures circulant dans le passage d'écoulement 10 de la conduite 1 et ayant diffusé vers l'espace annulaire sont stoppés par le film. En outre, le film permet également de stopper l'infiltration de l'ensemble des molécules d'eau ayant condensé au niveau de l'espace annulaire et partant de préserver la couche d'isolation thermique 8. De la sorte, la couche 8 n'est pas sujette au gonflement et ses propriétés d'isolation thermique restent performantes et inchangées.

Dans le cas où la au moins une bande intermédiaire est un film métallisé, le métal déposé sur le film mince polymérique peut être sélectionné parmi le zinc, le nickel, l'argent, le cuivre, l'or, l'indium, l'étain, le chrome, le titane, l'aluminium, etc.

L'épaisseur du revêtement métallique déposé sur le film mince polymérique est par exemple supérieure à 1 micromètre et de préférence comprise entre 1 et 15 micromètres.

De façon à éviter la formation de poches de gaz à l'interface entre la couche 8 et la au moins une bande intermédiaire, elles sont avantageusement liées entre elles. Le fait que la couche d'isolation thermique 8 et la au moins une bande intermédiaire soient liées entre elle signifie que la couche 8 n'est pas apte à se mouvoir axialement par rapport aux couches adjacentes le long de l'axe Δ-Δ' lorsque la conduite 1 est soumise à des efforts extérieurs de flexion.

En liant la couche 8 et la au moins une bande intermédiaire ensemble, cela permet également outre le fait d'éviter la formation de poches de gaz, d'éviter l'existence de discontinuités entre ces dernières, ces discontinuités pouvant être à l'origine de ponts thermiques. Or, les ponts thermiques ne sont pas souhaités puisqu'ils entraînent invariablement une perte des propriétés d'isolation thermique.

Lorsque la au moins une bande intermédiaire comprend un seul film, celui-ci est directement lié à la couche d'isolation thermique 8. En revanche, dans le cas où la au moins une bande intermédiaire comprend un agencement de plusieurs films, ceux-ci sont liés entre eux pour former une bande compacte, uniforme et isotrope par l'intermédiaire d'une de leurs faces qui présente par exemple une surface adhésive.

Pour lier la couche d'isolation thermique 8 avec la au moins une bande intermédiaire, on réalise une opération de collage. Par exemple, elles sont par exemple liées entre elles par une opération de collage simple par l'intermédiaire d'un adhésif souple tel qu'un élastomère ou un silicone, un adhésif sensible à la pression, un adhésif structural, ou bien par une opération de soudage par ultrasons ou encore par une opération de thermocollage.

Dans une alternative, la au moins une bande intermédiaire initialement indépendante de la couche d'isolation thermique 8 est en fait intégrée directement dans la structure de la couche 8. Ainsi, il est tout à fait envisageable d'imaginer que la au moins une bande intermédiaire puisse être appliquée sur au moins une des deux faces de la couche d'isolation thermique 8 lors de sa fabrication avant que celle-ci ne rejoigne un dispositif de liaison tel qu'un poste de collage, de thermocollage ou de soudage par ultrasons apte à lier ensemble la couche 8 et la au moins une bande intermédiaire.

La couche 8 ainsi obtenue combinerait à la fois une propriété d'isolation thermique avec une propriété barrière aux fluides.

La conduite 1 telle que décrite précédemment en Figure 1 possède un passage d'écoulement 10 lisse, c'est-à-dire que la couche interne de sa structure est la gaine de pression 2.

En revanche, lorsque la couche interne n'est pas la gaine de pression 2 mais une couche de renfort interne telle qu'une carcasse métallique, la conduite est du type « rough-bore » ou possédant un passage d'écoulement non lisse.

Une telle conduite est représentée sur la Figure 5 et la couche d'isolation thermique 8 selon la présente invention peut tout naturellement être disposée au sein de la structure de ce type de conduite tubulaire flexible sous-marine.

La carcasse métallique 12 est réalisée par l'enroulement à pas court d'un feuillard profilé en acier galvanisé, c'est-à-dire que la valeur absolu de l'angle d'hélice que fait le feuillard profilé avec l'axe longitudinal Δ-Δ' est comprise entre 70° et 90°. La carcasse métallique 12 est destinée à reprendre les efforts radiaux d'écrasement engendrés par la pression hydrostatique à l'égard de la gaine de pression 2.

De plus, la conduite 1 selon l'invention est du type non liée (« unbonded » en langue anglaise), c'est-à-dire que chaque couche de sa structure peut se mouvoir axialement par rapport aux couches adjacentes, le long de l'axe Δ-Δ' lorsque la conduite 1 est soumise à des efforts extérieurs de flexion.

Ces types de conduites sont bien connus de l'homme du métier et sont également décrites dans les documents normatifs API 17J « Specification for Unbonded Flexible Pipe » et API RP 17B « Recommended Practice for Flexible Pipe » publiés par l'American Petroleum Institute (API).

Aussi, l'utilisation de la conduite 1 n'est pas restreinte à certains types d'applications. En effet, comme la couche d'isolation thermique 8 possède aussi une bonne résistance en compression, la conduite 1 peut aussi bien être utilisée pour des applications statiques que dynamiques et tout aussi indifféremment, pour des applications grandes profondeurs (2500 à 3000 mètres) et même pour des applications très grandes profondeurs (jusqu'à 4000 mètres et plus).

Bien entendu, il est tout à fait envisageable de combiner entre elles les caractéristiques techniques relatives aux différentes réalisations de l'invention sans toutefois sortir du cadre de l'invention.

## Revendications

1. Conduite tubulaire flexible (1) sous-marine pour le transport de fluides d'hydrocarbures comprenant :
- une gaine de pression (2) ;
- au moins une nappe d'armure (3;6) ; et
- au moins une couche d'isolation thermique (8) réalisée par tissage triaxial d'au moins deux nappes de fils de chaîne (81) et d'au moins une rangée de fils de trame (82) pour lier les au moins deux nappes de fils de chaîne (81), la au moins une rangée de fils de trame (82) étant apte à solidariser les au moins deux nappes de fils de chaîne (81),
**caractérisée en ce que** les fils de trame (82) de la couche d'isolation thermique (8) comprennent une section creuse.

2. Conduite selon la revendication 1, **caractérisée en ce que** les fils de chaîne de la couche d'isolation thermique (8) comprennent une section creuse.

3. Conduite selon la revendication 2, **caractérisée en ce que** les fils (81 ; 82) de la couche d'isolation thermique (8) comprennent une section creuse multiparois.

4. Conduite selon l'une quelconque des revendications précédentes, **caractérisée en ce que** la résistance en traction de la couche d'isolation thermique (8), mesurée à 23°C est au moins égale à 150 daN selon la norme ASTM D638.

5. Conduite selon l'une quelconque des revendications précédentes, **caractérisée en ce que** la résistance en compression de la couche d'isolation thermique (8), mesurée à 23°C et à 60°C, est au moins égale à 20MPa selon la norme DIN EN 826.

6. Conduite selon l'une quelconque des revendications précédentes, **caractérisée en ce que** la conductivité thermique de la couche d'isolation thermique (8) mesurée à 60°C en référence aux normes DIN EN ISO 8497 et EN 12667 est comprise entre 0,01 W/m.K et 0,15 W/mK, de préférence entre 0,01 W/m.K et 0,10 W/m.K et avantageusement entre 0,01 W/m.K et 0,05 W/m.K.

7. Conduite selon l'une quelconque des revendications précédentes, **caractérisée en ce que** les fils de chaîne (81) et/ou les fils de trame (82) de la couche d'isolation thermique (8) sont choisis parmi les fibres organiques ou inorganiques.

8. Conduite selon la revendication 7, **caractérisée en ce que** les fibres organiques sont sélectionnées parmi les fibres naturelles végétales telles que par exemple les fibres de coton, de chanvre, de lin, de sisal, de jute, de kénaf, de coco, de bambou, de ramie, d'ortie, de palmiers, de bananiers ou les fibres synthétiques organiques telles que par exemple les fibres de polyamides, de polyesters, de polyéthylène, de polypropylène, acryliques, aramides.

9. Conduite selon la revendication 7, **caractérisée en ce que** les fibres inorganiques sont sélectionnées parmi les fibres synthétiques inorganiques telles que par exemple les fibres de verre, les fibres de basaltes et les fibres céramiques.

10. Conduite selon l'une quelconque des revendications 1 à 9, **caractérisée en ce que** la couche d'isolation thermique (8) est imprégnée d'une matière aérogel.

11. Conduite selon l'une quelconque des revendications précédentes, **caractérisée en ce qu'**au moins une bande intermédiaire est appliquée sur au moins une des faces de la au moins une couche d'isolation thermique (8) et **en ce que**, elle est liée avec celle-ci.

12. Conduite selon la revendication 11, **caractérisée en ce que** la au moins une bande intermédiaire comprend un agencement d'un ou plusieurs films minces superposés les uns au-dessus des autres.

13. Conduite selon la revendication 12, **caractérisée en ce que** le film mince est un film polymérique.

14. Conduite selon la revendication 12 ou 13, **caractérisée en ce que** le film mince est métallisé.

15. Conduite selon l'une quelconque des revendications 11 à 14, **caractérisée en ce que** la au moins une bande intermédiaire est liée à la couche d'isolation thermique (8) par soudage aux ultrasons, par collage ou par thermocollage.

## Patentansprüche

1. Flexible Unterwasser-Rohrleitung (1) für den Transport von Kohlenwasserstoffen, umfassend:
- einen Druckmantel (2),
- mindestens eine Bewehrungslage (3; 6); und
- mindestens eine Wärmedämmschicht (8), die durch triaxiales Verweben von mindestens zwei Lagen aus Kettfäden (81) und von mindestens einer Reihe aus Schussfäden (82) realisiert ist, um die mindestens zwei Lagen aus Kettfäden (81) zu verbinden,
wobei die mindestens eine Reihe aus Schussfäden (82) dafür eingerichtet ist, die mindestens zwei Lagen aus Kettfäden (81) fest miteinander zu verbinden,
**dadurch gekennzeichnet, dass** die Schussfäden (82) der Wärmedämmschicht (8) einen hohlen Abschnitt umfassen.

2. Leitung nach Anspruch 1, **dadurch gekennzeichnet, dass** die Kettfäden der Wärmedämmschicht (8) einen hohlen Abschnitt umfassen.

3. Leitung nach Anspruch 1 oder 2, **dadurch gekennzeichnet, dass** die Fäden (81; 82) der Wärmedämmschicht (8) einen hohlen mehrwandigen Abschnitt umfassen.

4. Leitung nach einem der vorhergehenden Ansprüche, **dadurch gekennzeichnet, dass** die Zugfestigkeit der Wärmedämmschicht (8), gemessen bei 23 °C, mindestens gleich 150 daN gemäß der Norm ASTM D638 ist.

5. Leitung nach einem der vorhergehenden Ansprüche, **dadurch gekennzeichnet, dass** die Druckfestigkeit der Wärmedämmschicht (8), gemessen bei 23 °C und bei 60 °C, mindestens gleich 20 MPa gemäß der Norm DIN EN 826 ist.

6. Leitung nach einem der vorhergehenden Ansprüche, **dadurch gekennzeichnet, dass** die Wärmeleitfähigkeit der Wärmedämmschicht (8), gemessen bei 60 °C, unter Bezug auf die Normen DIN EN ISO 8497 und EN 12667, zwischen 0,01 W/m.K und 0,15 W/m.K beträgt, vorzugsweise zwischen 0,01 W/m.K und 0,10 W/m.K und vorteilhafterweise zwischen 0,01 W/m.K und 0,05 W/m.K.

7. Leitung nach einem der vorhergehenden Ansprüche, **dadurch gekennzeichnet, dass** die Kettfäden (81) und/oder die Schussfäden (82) der Wärmedämmschicht (8) aus den organischen oder anorganischen Fasern ausgewählt sind.

8. Leitung nach Anspruch 7, **dadurch gekennzeichnet, dass** die organischen Fasern ausgewählt sind aus den pflanzlichen Naturfasern, wie zum Beispiel Fasern aus Baumwolle, aus Hanf, aus Leinen, aus Sisal, aus Jute, aus Kenaf, aus Kokos, aus Bambus, aus Ramie, aus Brennnesseln, aus Palmen, aus Bananen, oder aus den organischen Synthetikfasern wie zum Beispiel Fasern aus Polyamiden, aus Polyestern, aus Polyethylen, aus Polypropylen, Acrylfasern, Aramiden.

9. Leitung nach Anspruch 7, **dadurch gekennzeichnet, dass** die anorganischen Fasern ausgewählt sind aus den anorganischen Synthetikfasern wie zum Beispiel Glasfasern, Basaltfasern oder Keramikfasern.

10. Leitung nach einem der Ansprüche 1 bis 9, **dadurch gekennzeichnet, dass** die Wärmedämmschicht (8) mit einem Aerogelmaterial imprägniert ist.

11. Leitung nach einem der vorhergehenden Ansprüche, **dadurch gekennzeichnet, dass** mindestens ein Zwischenband auf mindestens einer der Flächen der mindestens einen Wärmedämmschicht (8) aufgebracht ist und dass es mit dieser verbunden ist.

12. Leitung nach Anspruch 11, **dadurch gekennzeichnet, dass** das mindestens eine Zwischenband eine Anordnung aus einer oder mehreren dünnen Folien umfasst, die übereinander angeordnet sind.

13. Leitung nach Anspruch 12, **dadurch gekennzeichnet, dass** die dünne Folie eine Polymerfolie ist.

14. Leitung nach Anspruch 12 oder 13, **dadurch gekennzeichnet, dass** die dünne Folie metallisiert ist.

15. Leitung nach einem der Ansprüche 11 bis 14, **dadurch gekennzeichnet, dass** das mindestens eine Zwischenband mit der Wärmedämmschicht (8) durch Ultraschallverschweißen, durch Verkleben oder durch Heißverkleben verbunden ist.

## Claims

1. A flexible tubular underwater pipe (1) for transporting hydrocarbon fluids comprising:
- a pressure sheath (2);
- at least one reinforcement ply (3;6); and
- at least one thermal insulation layer (8) produced by triaxial weaving of at least two plies of warp threads (81) and of at least one row of weft threads (82) to link the at least two plies of warp threads (81), the at least one row of weft threads (82) being capable of interconnecting the at least two plies of warp threads (81),
**characterised in that** the weft threads (82) of the thermal insulation layer (8) comprise a hollow section.

2. The pipe according to claim 1, **characterised in that** the warp threads of the thermal insulation layer (8) comprise a hollow section.

3. The pipe according to claim 2, **characterised in that** the threads (81; 82) of the thermal insulation layer (8) comprise a multiwalled hollow section.

4. The pipe according to any one of the preceding claims, **characterised in that** the tensile strength of the thermal insulation layer (8), measured at 23°C, is at least equal to 150 daN according to ASTM standard D638.

5. The pipe according to any one of the preceding claims, **characterised in that** the compressive strength of the thermal insulation layer (8), measured at 23°C and at 60°C, is at least equal to 20 MPa according to DIN standard EN 826.

6. The pipe according to any one of the preceding claims, **characterised in that** the thermal conductivity of the thermal insulation layer (8) measured at 60°C with reference to DIN standards EN ISO 8497 and EN 12667 is between 0.01 W/m.K and 0.15 W/m.K, preferably between 0.01 W/m.K and 0.10 W/m.K and advantageously between 0.01 W/m.K and 0.05 W/m.K.

7. The pipe according to any one of the preceding claims, **characterised in that** the warp threads (81) and/or the weft threads (82) of the thermal insulation layer (8) are chosen from organic or inorganic fibres.

8. The pipe according to claim 7, **characterised in that** the organic fibres are selected from natural plant fibres such as cotton fibres, hemp fibres, flax fibres, sisal fibres, jute fibres, kenaf fibres, coconut fibres, bamboo fibres, ramie fibres, nettle fibres, palm fibres or banana fibres, for example, or organic synthetic fibres such as polyamide fibres, polyester fibres, polyethylene fibres, polypropylene fibres, acrylic fibres or aramid fibres, for example.

9. The pipe according to claim 7, **characterised in that** the inorganic fibres are selected from inorganic synthetic fibres such as glass fibres, basalt fibres and ceramic fibres, for example.

10. The pipe according to any one of claims 1 to 9, **characterised in that** the thermal insulation layer (8) is impregnated with an aerogel substance.

11. The pipe according to any one of the preceding claims, **characterised in that** at least one intermediate strip is applied onto at least one of the faces of the at least one thermal insulation layer (8) and **in that** it is connected thereto.

12. The pipe according to claim 11, **characterised in that** the at least one intermediate strip comprises an arrangement of one or more thin films superposed above one another.

13. The pipe according to claim 12, **characterised in that** the thin film is a polymer film.

14. The pipe according to claim 12 or 13, **characterised in that** the thin film is metallised.

15. The pipe according to any one of claims 11 to 14, **characterised in that** the at least one intermediate strip is connected to the thermal insulation layer (8) by ultrasonic welding, by bonding or by thermobonding.
